(19) Europäisches Patentamt
European Patent Office
Office européen des brevets

(11) Publication number: **0 036 244**
**A1**

(12) # EUROPEAN PATENT APPLICATION

(21) Application number: **81300430.6**

(22) Date of filing: **02.02.81**

(51) Int. Cl.³: **A 01 N 47/30**
//(A01N47/30, 43/50)

(30) Priority: **05.02.80 GB 8003752**
**05.03.80 GB 8007543**

(43) Date of publication of application:
**23.09.81 Bulletin 81/38**

(84) Designated Contracting States:
**AT BE CH DE FR GB IT LI LU NL SE**

(71) Applicant: **MAY & BAKER LIMITED**

**Dagenham Essex, RM10 7 XS(GB)**

(72) Inventor: **Hewett, Richard Henry**
**The Briars Monk Street**
**Thaxted Essex(GB)**

(74) Representative: **Kelly, Hubert Francis et al,**
**J.A. Kemp & Co. 14 South Square Gray's Inn**
**London WC1R 5EU(GB)**

(54) **Herbicidal compositions comprising 1-(3,4-dichlorobenzyl)imidazole-N,N'-dimethyl-4,5-dicarboxamide.**

(57) The spectrum of activity of the well-known herbicides isoproturon (i.e. N,N-dimethyl-N'-4-isopropylphenylurea) and metoxuron [i.e. N'-(3-chloro-4-methoxyphenyl)-N, N-dimethylurea], which are widely used for the control of grass and broad-leafed weeds in cereal crops, is extended to include the control of *inter alia Veronica* spp. and *Viola* spp., and a synergistic control of *Stellaria media, Matricaria inodora* and *Polygonum* species is produced by the addition to compositions containing them of the recently discovered herbicide 1-(3,4-dichlorobenzyl)- imidazole-N,N'-dimethyl-4, 5-dicarboxamide in proportions of from 1:4 to 1:1 by weight of said imidazole derivative to isoproturon and/or metoxuron.

EP 0 036 244 A1

Croydon Printing Company Ltd.

DESCRIPTION

"HERBICIDAL COMPOSITIONS COMPRISING 1-(3,4-DICHLOROBENZYL)IMIDAZOLE-N,N'-DIMETHYL-4,5-DICARBOXAMIDE"

The present invention relates to new herbicidal compositions comprising 1-(3,4-dichlorobenzyl)imidazole-N,N'-dimethyl-4,5-dicarboxamide of the formula:-

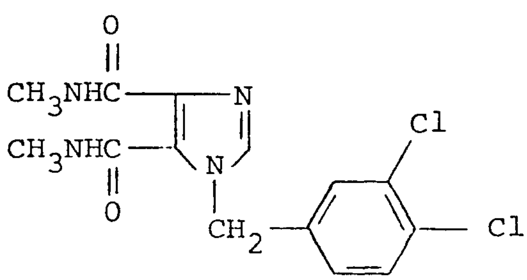

which is disclosed in the Specification of our British Patent Application No. 9277/77, in the Specification of United States Patent No. 4185992 and in the Specification of our Belgian Patent No. 864614 as a pre- and/or post-emergence herbicide, and to their use in agriculture.

Phenylurea herbicides, for example isoproturon (i.e. N,N-dimethyl-N'-4-isopropylphenylurea), metoxuron [i.e. N'-(3-chloro-4-methoxyphenyl)-N,N-dimethylurea] and chlortoluron [i.e. N'-(3-chloro-4-methylphenyl)-N,N-dimethylurea], are widely used for the control of grass and broad-leafed weeds.

For example isoproturon has been successfully used for several years to control the following weed species in cereal crops by pre- or post-emergence application:-

| Grass Weeds | Broad-leaf Weeds |
|---|---|
| Poa annua | Sinapis arvensis |
| Phalaris minor | Stellaria media |
| Poa trivialis | Chrysanthemum segetum |
| Alopecurus myosuroides | Chenopodium album |
| Avena spica-venti | Senecio vulgaris |
| Lolium rigidum | Galeopsis tetrahit |
| Lolium perenne | Anthemis arvensis |
| Avena fatua | Anthemis cotula |
| Avena ludoviciana | Matricaria inodora |
| Bromus sterilis | Atriplex patula |
| | Papaver rhoeas |
| | Spergula arvensis |

Isoproturon may also be used to control the following broad-leafed weeds:-

| | |
|---|---|
| Polygonum convolvulus | Fumaria officinalis |
| Polygonum aviculare | Aphanes arvensis |
| Polygonum persicaria | Raphanus raphanistrum |
| Polygonum lapathifolium | Anagallis arvensis |
| Solanum nigrum | Capsella bursa-pastoris, |
| Myosotis arvensis | |

but with more variable results, necessitating the use of

relatively high rates of application if reliable weed control is to be achieved.

Metoxuron and chlortoluron have similar spectra of weed control.

However, the extensive use of isoproturon and other phenylurea herbicides, in particular metoxuron and chlortoluron, by which certain species such as Veronica persica, Veronica arvensis, Veronica hederifolia, Viola tricolor and Viola arvensis are poorly controlled, has led to an increase in the population of Veronica and Viola, such that they now constitute a serious weed problem in cereal growing.

As a result of research and experimentation it has been discovered that the use of the compound 1-(3,4-dichlorobenzyl)imidazole-N,N'-dimethyl-4,5-dicarboxamide (hereinafter referred to for convenience as Compound A) in combination with isoproturon and/or metoxuron extends their spectrum of activity to include the control of Veronica spp., and Viola spp. Therefore the said combined use represents an important technological advance.

Surprisingly, in addition to this, it has been found that the combined herbicidal activity of Compound A with isoproturon and/or metoxuron against certain weed species is much greater than expected when applied post-emergence (e.g. as a post-emergence spray), i.e. the

herbicidal activity of Compound A with isoproturon and/or metoxuron is synergistic. In particular, the combined herbicidal activity of Compound A with isoproturon has been found to be synergistic on post-emergence application on the important weed Stellaria media, Matricaria inodora and Polygonum species, in particular Polygonum aviculare, and the combined herbicidal activity of Compound A with metoxuron has been found to be synergistic on post-emergence application on Stellaria media and Polygonum species, in particular Polygonum lapathifolium. In contrast, it has been found that, although the combined use of Compound A and chlortoluron extends the spectrum of weed control to include the control of Veronica spp. and Viola spp., the combined use of Compound A with chlortoluron against Stellaria media, Matricaria inodora and Polygonum species, in particular Polygonum lapathifolium, is additive and not synergistic.

Stellaria media, Matricaria inodora and Polygonum aviculare are three of the most serious weed problems encountered in cereal growing. Their rapid growth makes them extremely competitive with the crop and unless they are controlled they will seriously reduce crop yield. In addition Polygonum aviculare, known commonly as iron weed, knotgrass or wireweed, and Polygonum lapathifolium , known commonly as willow weed, can be a considerable hindrance to combine harvesting. The synergistic activities

of isoproturon and/or metoxuron with Compound A therefore represents a major advance in the control of these weeds.

In commercial practice a wide spectrum herbicide for post-emergence use in cereals must be expected to control Galium aparine in addition to those weeds already mentioned. If left uncontrolled this weed will thrive in the absence of competition from other weed species and will grow over the crop causing loss of yield and harvesting difficulties. For this reason, the combined use of isoproturon and/or metoxuron with Compound A may also advantageously include a herbicide with good activity by post-emergence application against Galium aparine, for example mecoprop [i.e. (±)-2-(4-chloro-2-methylphenoxy)propionic acid] optionally in the form of metal, e.g. sodium or potassium, or amine salts or esters at rates of 0.5-2 kg a.i./ha. By the abbreviation 'a.i.' in meant 'active ingredient', e.g. the amount of mecoprop. By the abbreviation 'ha' is meant hectare.

Accordingly the present invention provides a method for the control of the growth of weeds by pre- or post-emergence application which comprises the combined use of (a) isoproturon and/or metoxuron and (b) Compound A at application rates of between 0.25 and 2 kg/ha, and

preferably between 0.75 and 2 kg/ha, of each of (a) and (b) in proportions of 4:1 to 1:1, and preferably 2:1 to 1:1 of (a) to (b), with or without a wetting agent to control a very wide spectrum of annual broad-leafed weeds and grass weeds in cereal crops, e.g. wheat, barley, oats and rye, without significant permanent damage to the crop. The combined use described above offers both foliar and residual activity and consequently can be employed over a long period of crop development, i.e. from pre-weed pre-crop emergence to post-weed post-crop emergence. Applications made soon after emergence of both weed and crop give best results as this timing most effectively combines foliar and residual activity. Lower rates of application, for example from 0.25 to 0.75 kg/ha of (a) isoproturon and/or metoxuron and (b) Compound A in the proportions hereinbefore specified are generally suitable when application is made to broad-leafed weeds and grass weeds at the seedling growth stage but higher rates of application, for example from 0.75 to 2.0 kg/ha of (a) isoproturon and/or metoxuron and (b) Compound A in the proportions hereinbefore specified are generally suitable when application is made to established broad-leafed weeds and grass weeds, i.e. weeds which have matured beyond the seedling growth stage.

By the term 'pre-emergence application' is meant application to the soil in which the weed seeds or seedlings are present before emergence of the weeds above the surface of the soil. By the term 'post-emergence application' is meant application to the aerial or exposed portions of the weeds which have emerged above the surface of the soil. By the term 'foliar activity' is meant herbicidal activity produced by application to the aerial or exposed portions of the weeds which have emerged above the surface of the soil. By the term 'residual activity' is meant herbicidal activity produced by application to the soil in which weed seeds or seedlings are present before emergence of the weeds above the surface of the soil, whereby seedlings present at the time of application or which germinate subsequent to application from seeds present in the soil, are controlled.

Where Galium aparine is present in the emerged weed population of the locus of crop growth at which weeds are to be controlled by the combined use of isoproturon and/or metoxuron and Compound A, this combined use should, as hereinbefore indicated, be associated with the use of a herbicide with good activity by post-emergence application against that weed species. For this purpose, i.e. the control of the growth of Galium aparine, the associated use of mecoprop optionally as an amine or metal, e.g. sodium or potassium, salt or ester thereof, at application rates of 0.5 to 2.0 kg a.i./ha in proportions of 1:2 to 4:1, and preferably 1:2 to 2:1, of total isoproturon and/or metoxuron and Compound A; mecoprop a.i. is particularly suitable and constitutes a preferred feature of the present invention. Alternatively, or in addition to mecoprop, Galium aparine may also be controlled by the associated use of dichloroprop [i.e. (±)-2-(2,4-dichlorophenoxy)propionic acid and its metal, e.g. sodium or potassium, or amine salts or esters, dinoterb (i.e. 2-*tert*-butyl-4,6-dinitrophenol) and its metal, e.g. sodium or potassium, ammonium or amine salts, bromoxynil (i.e. 3,5-dibromo-4-hydroxybenzonitrile) and its metal, e.g. sodium or potassium, ammonium or amine salts or esters, in particular bromoxynil octanoate, ioxynil (i.e. 4-hydroxy-3,5-di-iodobenzonitrile) and its metal, e.g. sodium or potassium, ammonium or amine salts or

esters, in particular ioxynil octanoate, pyridate (i.e. 6-chloro-3-phenylpyridazin-4-yl S-octyl thiocarbonate), bentazone [i.e. 3-isopropyl-(1H)-benzo-2,1,3-thiadiazin-4-one 2,3-dioxide) or benazolin (i.e. 4-chloro-2-oxobenzothiazolin-3-ylacetic acid) or its metal, e.g. sodium or potassium, ammonium or amine salts or esters, e.g. its ethyl ether.

In accordance with usual practice, a tank mix may be prepared prior to use by combining separate formulations of the individual herbicidal components.

The following Experiments illustrate the present invention:-

EXPERIMENT 1

The following greenhouse experiment demonstrates the synergistic activity of the combined use of isoproturon and Compound A in controlling the growth of certain weeds.

Greenhouse experiment showing nature of biological synergism between isoproturon and 1-(3,4-dichlorobenzyl)-imidazole-N,N'-dimethyl-4,5-dicarboxamide (Compound A).

Materials

Chemicals and formulations

Isoproturon - formulated as 50% w/v aqueous suspension concentrate (commercial product).

1-(3,4-Dichlorobenzyl)imidazole-N,N'-dimethyl-4,5-dicarboxamide (Compound A) formulated as a 50% w/v

aqueous suspension concentrate containing:-

| | |
|---|---|
| Compound A | 50% w/v |
| Polyfon H (sodium lignosulphonate surfactant) | 1.9% w/v |
| Rhodigel 23 (polysaccharide xanthan gum) | 0.1% w/v |
| formaldehyde (40% w/v solution) | 0.05% v/v |
| water | to 100% by volume. |

This was prepared by mixing Polyfon H and formaldehyde in some water, and then adding Compound A. This mix was passed through a 'Dynomill' to grind Compound A into small particles. The Rhodigel 23 was then added with mixing and, when dissolved, the whole was topped up with water.

<u>Treatments and preparation of spray suspensions</u>

Spray suspensions were prepared from the above formulations to give dose rates equivalent to 0.125, 0.25, 0.5, 1.0 and 2.0 kg a.i./ha, in 230 l/ha, of isoproturon or Compound A and in all possible combinations i.e.

Isoproturon kg a.i./ha

Compound A kg a.i./ha

| 0 | 0.125 | 0.25 | 0.5 | 1.0 | 2.0 |
|---|---|---|---|---|---|
| 0.125 | 0.125<br>+<br>0.125 | 0.25<br>+<br>0.125 | 0.5<br>+<br>0.125 | 1.0<br>+<br>0.125 | 2.0<br>+<br>0.125 |
| 0.25 | 0.125<br>+<br>0.25 | 0.25<br>+<br>0.25 | 0.5<br>+<br>0.25 | 1.0<br>+<br>0.25 | 2.0<br>+<br>0.25 |
| 0.5 | 0.125<br>+<br>0.5 | 0.25<br>+<br>0.5 | 0.5<br>+<br>0.5 | 1.0<br>+<br>0.5 | 2.0<br>+<br>0.5 |
| 1.0 | 0.125<br>+<br>1.0 | 0.25<br>+<br>1.0 | 0.5<br>+<br>1.0 | 1.0<br>+<br>1.0 | 2.0<br>+<br>1.0 |
| 2.0 | 0.125<br>+<br>2.0 | 0.25<br>+<br>2.0 | 0.5<br>+<br>2.0 | 1.0<br>+<br>2.0 | 2.0<br>+<br>2.0 |

Tween 20 (polyoxyethylene sorbitan monododecanoate) wetting agent was added to each spray suspension to give a concentration of 0.05%.

The isoproturon doses were prepared by placing an appropriate volume of aqueous concentrate into a 50 ml measuring cylinder thus:-

0.055 ml - 50 ml = 0.125 kg a.i./ha

0.11 ml - 50 ml = 0.25 kg a.i./ha

0.22 ml - 50 ml = 0.5 kg a.i./ha

0.43 ml - 50 ml = 1.0 kg a.i./ha

0.87 ml - 50 ml = 2.0 kg a.i./ha

The aqueous concentrate was then diluted by adding 10 ml of distilled water, 2.5 ml of a 1% aqueous solution of Tween 20, and making up to 50 ml.

The Compound A doses were similarly prepared, but in this instance the suspensions were prepared from a 10 kg a.i./ha stock suspension which was made up by pipetting 8.7 ml of aqueous suspension concentrate into a 100 ml measuring cylinder and making up to volume with distilled water. The required dose rates were prepared thus from the stock suspension.

0.625 ml - 50 ml = 0.125 kg a.i./ha

1.25 ml - 50 ml = 0.25 kg a.i./ha

2.5 ml - 50 ml = 0.5 kg a.i./ha

5.0 ml - 50 ml = 1.0 kg a.i./ha

10.0 ml - 50 ml = 2.0 kg a.i./ha.

The suspensions were diluted to 50 ml in the same way as were the isoproturon suspensions.

The combinations of isoproturon and Compound A were prepared in a similar manner. For example, to obtain a mixture of 0.5 kg a.i./ha isoproturon + 0.5 kg a.i./ha Compound A + 0.05% Tween 20 the following formula was adopted.

0.22 ml of isoproturon aqueous concentrate and
2.5 ml of Compound A stock suspension

were added to a 50 ml measuring cylinder. This mixed suspension was then diluted by adding 10 ml of distilled water, 2.5 ml of 1% Tween 20 solution and then up to 50 ml total volume by adding further distilled water.

Before spraying the suspensions were thoroughly agitated to ensure even distribution of the active ingredients.

Spraying

All treatments were applied to the plant species using a laboratory spraying apparatus fitted with a flat fan jet calibrated to give a spray volume of 230 l/ha when used at a pressure of 2.1 $kgf/cm^2$.

Plant material

Weed species, i.e. *Stellaria media*, *Matricaria inodora* and *Polygonum aviculare*, were grown in 9 cm diameter bitumenised paper pots containing John Innes No. 1 potting compost in a greenhouse. For each species

5 plants were grown in each pot and three pots of each weed species were sprayed with each treatment. The growth stage of the plants at spraying was as follows:-

*Stellaria media* - 6 leaves, side branches initiated

*Matricaria inodora* - 6 leaves

*Polygonum aviculare* - 3-4 leaves

After spraying the plants were placed in a greenhouse (day temperature 21°C, night temperature 15°C, day length 16 hours) and grown on for 3 weeks. Plants were watered overhead by hand 24 hours after spraying and then at daily intervals.

Assessments

After 3 weeks the activity of the treatments was visually assessed as percentage reduction in growth of treated plants compared with growth of untreated plants. Percentage reduction in growth was then plotted against dose rate to calculate the effective dose kg a.i./ha giving 90% growth reduction (ED90). ED90's were calculated for isoproturon and for Compound A in the absence of isoproturon and for isoproturon in the presence of Compound A.

The results obtained are given in following Table I.

TABLE I

ED90's (kg a.i./ha) for isoproturon alone, isoproturon in the presence of Compound A and Compound A alone

| Test Compounds | *Stellaria media* | *Polygonum aviculare* | *Matricaria inodora* |
|---|---|---|---|
| Isoproturon alone (kg a.i./ha) | 0.22 | 1.3 | 1.45 |
| Isoproturon in presence of 0.125 kg a.i./ha of Compound A | <0.125 | 0.23 | 0.8 |
| Isoproturon in presence of 0.25 kg a.i./ha of Compound A | <0.125 | 0.23 | 0.41 |
| Isoproturon in presence of 0.5 kg a.i./ha of Compound A | <0.125 | 0.22 | 0.26 |

TABLE I (continued)

| Test Compounds | Stellaria media | Polygonum aviculare | Matricaria inodora |
|---|---|---|---|
| Isoproturon in presence of 1.0 kg a.i./ha of Compound A | <0.125 | <0.125 | 0.24 |
| Isoproturon in presence of 2.0 kg a.i./ha of Compound A | <0.125 | <0.125 | <0.125 |
| Compound A alone (kg a.i./ha) | 0.45 | >2.0 | >2.0 |

This experiment shows the synergistic nature of the joint action of Compound A and isoproturon on Stellaria media, Matricaria inodora and Polygonum aviculare. For example, whereas 1.3 kg a.i./ha of isoproturon is needed to control Polygonum aviculare, with the addition of only 0.125 kg a.i./ha of Compound A the amount of isoproturon needed to control this weed is reduced to 0.23 kg a.i./ha. In other words a combination of 0.125 kg a.i./ha Compound A and 0.23 kg a.i./ha isoproturon (i.e. 0.358 kg a.i./ha total herbicide) gives control equivalent to that achieved by 1.3 kg a.i./ha isoproturon or more than 2 kg a.i./ha Compound A when used in the absence of isoproturon.

EXPERIMENT 2

The following greenhouse experiment demonstrates the synergistic activity of the combined use of metoxuron and Compound A in controlling the growth of certain weeds in comparison with the additive effect of mixtures of chlortoluron and Compound A.

Greenhouse experiment showing nature of biological synergism between metoxuron and 1-(3,4-dichlorobenzyl)-imidazole-N,N'-dimethyl-4,5-dicarboxamide (Compound A).

Chemicals and formulations

Metoxuron - formulated as 80% w/w wettable powder (commercial product)

Chlortoluron - formulated as 80% w/w wettable powder (commercial product).

1-(3,4-Dichlorobenzyl)imidazole-N,N'-dimethyl-4,5-dicarboxamide (Compound A) formulated as a 50% w/v aqueous suspension concentrate as hereinbefore described in Experiment 1.

Treatments and preparation of spray suspensions

Spray suspensions were prepared by procedures similar to those described in Experiment 1 from the above formulations to give dose rates equivalent to 0.25, 0.5, 0.75 and 1.0 kg a.i./ha in 230 l/ha, of metoxuron, chlortoluron or Compound A and in all possible combinations, i.e.

Metoxuron or chlortoluron kg a.i./ha

Compound A kg a.i./ha

| | | | | |
|---|---|---|---|---|
| 0 | 0.25 | 0.5 | 0.75 | 1.0 |
| 0.25 | 0.25 + 0.25 | 0.5 + 0.25 | 0.75 + 0.25 | 1.0 + 0.25 |
| 0.5 | 0.25 + 0.5 | 0.5 + 0.5 | 0.75 + 0.5 | 1.0 + 0.5 |
| 0.75 | 0.25 + 0.75 | 0.5 + 0.75 | 0.75 + 0.75 | 1.0 + 0.75 |
| 1.0 | 0.25 + 1.0 | 0.5 + 1.0 | 0.75 + 1.0 | 1.0 + 1.0 |

Tween 20 wetting agent was added to each spray suspension to give a concentration of 0.01%.

The Compound A doses were prepared by placing an appropriate volume of aqueous concentrate into a 50 ml measuring cylinder thus:-

0.096 ml - 50 ml = 0.25 kg a.i./ha

0.192 ml - 50 ml = 0.5 kg a.i./ha

0.288 ml - 50 ml = 0.75 kg a.i./ha

0.384 ml - 50 ml = 1.0 kg a.i./ha.

The aqueous concentrate was then diluted by adding 10 ml of distilled water, 0.5 ml of a 1% aqueous solution of Tween 20, and making up to 50 ml.

The metoxuron and chlortoluron doses were similarly prepared, but in this instance the powders were weighed into a 50 ml measuring cylinder thus:-

0.06 g - 50 ml = 0.25 kg a.i./ha

0.12 g - 50 ml = 0.5 kg a.i./ha

0.18 g - 50 ml = 0.75 kg a.i./ha

0.24 g - 50 ml = 1.0 kg a.i./ha.

The powders were suspended in water and diluted to 50 ml in the same way as were the Compound A suspensions.

The combinations of metoxuron or chlortoluron and Compound A were prepared in a similar manner. For example to obtain a mixture of 0.5 kg a.i./ha metoxuron or chlortoluron + 0.5 kg a.i./ha Compound A + 0.01% Tween 20 the following was adopted.

0.12 g of metoxuron or chlortoluron wettable powder and

0.192 ml of Compound A suspension

were added to a 50 ml measuring cylinder. This mixed suspension was then diluted by adding 10 ml of distilled water, 0.5 ml of 1% Tween 20 solution and then up to 50 ml total volume by adding further distilled water.

Before spraying the suspensions were thoroughly agitated to ensure even distribution of the active ingredients.

Spraying

All treatments were applied to the plant species using a laboratory spraying apparatus fitted with a flat fan jet calibrated to give a spray volume of 230 l/ha when used at a pressure of 2.1 kgf/$cm^2$.

Plant material

Weed species, i.e. Stellaria media, Matricaria inodora and Polygonum lapathifolium, were grown in 9 cm diameter bitumenised paper pots containing John Innes No. 1 potting compost in a greenhouse. For each species 5 plants were grown in each pot and three pots of each weed species were sprayed with each treatment. The growth stage of the plants at spraying was as follows:

Stellaria media - 6 leaves, side branches initiated

*Matricaria inodora* - 6 leaves

*Polygonum lapathifolium* - 3-4 leaves

After spraying the plants were placed in a greenhouse (day temperature 21°C, night temperature 15°C, day length 16 hours) and grown on for 3 weeks.

Plants were watered overhead by hand 24 hours after spraying and then at daily intervals.

Assessments

After 3 weeks the activity of the treatments was visually assessed as percentage reduction in growth of treated plants compared with growth of untreated plants. Percentage reduction in growth was then plotted against dose rate to calculate the effective dose kg a.i./ha giving 90% growth reduction (ED90). ED90's were calculated for metoxuron and chlortoluron and for Compound A in the absence of metoxuron or chlortoluron and for metoxuron or chlortoluron in the presence of Compound A.

The results obtained are given in following Tables II and III.

TABLE II

ED90's (kg a.i./ha) for metoxuron alone, metoxuron in the presence of Compound A and Compound A alone.

| Test Compound | *Stellaria media* | *Polygonum lapathifolium* | *Matricaria inodora* |
|---|---|---|---|
| Metoxuron alone (kg a.i./ha) | 0.7 | >1.0 | 1.1 |
| Metoxuron in presence of 0.25 kg a.i./ha of Compound A | <0.25 | 0.27 | 0.9 |
| Metoxuron in presence of 0.5 kg a.i./ha of Compound A | <0.25 | <0.25 | 0.85 |
| Metoxuron in presence of 0.75 kg a.i./ha of Compound A | <0.25 | <0.25 | 0.41 |
| Metoxuron in presence of 1.0 kg a.i./ha of Compound A | <0.25 | <0.25 | 0.29 |
| Compound A alone (kg a.i./ha) | 0.76 | 0.74 | >1.0 |

TABLE III

ED90's (kg a.i./ha) for chlortoluron alone, chlortoluron in the presence of Compound A and Compound A alone.

| Test Compound | *Stellaria media* | *Polygonum lapathifolium* | *Matricaria inodora* |
|---|---|---|---|
| Chlortoluron alone (kg a.i./ha) | 0.24 | $<$0.25 | 1.15 |
| Chlortoluron in presence of 0.25 kg a.i./ha of Compound A | $<$0.25 | $<$0.25 | 0.69 |
| Chlortoluron in presence of 0.5 kg a.i./ha of Compound A | $<$0.25 | $<$0.25 | 0.57 |
| Chlortoluron in presence of 0.75 kg a.i./ha of Compound A | $<$0.25 | $<$0.25 | 0.3 |
| Chlortoluron in presence of 1.0 kg a.i./ha of Compound A | $<$0.25 | $<$0.25 | 0.28 |
| Compound A alone (kg a.i./ha) | 0.6 | 0.57 | $>$1.0 |

( '$<$' means 'less than' )

( '$>$' means 'greater than')

This experiment shows the synergistic effect of the joint action of Compound A and metoxuron on *Stellaria media* and *Polygonum lapathifolium*. For example, whereas > 1.0 kg a.i./ha of metoxuron is needed to control *Polygonum lapathifolium*, with the addition of only 0.25 kg a.i./ha of Compound A the amount of metoxuron needed to control this weed is reduced to 0.27 kg a.i./ha. In other words a combination of 0.25 kg a.i./ha Compound A and 0.27 kg a.i./ha metoxuron (i.e. 0.52 a.i./ha total herbicide) gives control equivalent to that achieved by > 1.0 kg a.i./ha metoxuron or 0.74 kg a.i./ha Compound A when used in the absence of metoxuron. In contrast, the results obtained with chlortoluron and Compound A show an additive effect only.

The following field experiments (Experiments 3 to 5) show that the further combination with mecoprop in the form of a tank mix can give excellent control of a wide spectrum of grass and broad-leafed weeds in cereal crops with substantial increases in crop yield by comparison with treatments comprising at least isoproturon as the active ingredient.

EXPERIMENT 3

Site 1 Southern England

Crop: winter wheat (Maris Hobbitt).

Date sprayed: mid-December

Machine: a motorized small plot sprayer using 5 x 8002 tee jets each at 50 cm spacing at 30 p.s.i. (2.1 $kgf/cm^2$) giving 248.2 l/ha in low gear.

Plots: 2.5 x 5 m, x 3 replicates for each treatment.

Therefore area to be sprayed = 37.5 sq m

Therefore volume required = $\frac{35.5 \times 248.2 \times 1000}{10,000}$

= 930.8 ml (vol of 1100 ml used for spraying)

Calculated that 1 kg/ha = 4.03 ml/l

= 4.43 ml/1100 ml.

Materials

(a) Formulation A-aqueous suspension (flowable) 50% w/v Compound A - as hereinbefore described in Experiment 1.

(b) Commercial suspension concentrate containing 50% w/v isoproturon.

(c) Commercial aqueous concentrate containing 60% w/v mecoprop (as K (potassium) salt).

Tween 20 wetting agent.

| Treatments | Dose kg a.i./ha | Volumes in 1100 ml water |
|---|---|---|
| 1. Compound A (a) + isoproturon (b) + mecoprop (as K salt) (c) + 0.1% Tween 20 | 1.0(a) + 1.0(b) + 1.3(c) | 8.9 + 8.9 + 9.6 ml |
| 2. isoproturon (b) + 0.1% Tween 20 | 2.0(b) | 17.7 ml |
| 3. isoproturon (b) + mecoprop (as K salt) (c) + 0.1% Tween 20 | 2.0(b) + 1.3(c) | 17.7 + 9.6 ml |

Note: Tween 20 stock solution of 20% was made and from this stock 5.5 ml was pipetted into 1100 ml water to give resultant 0.1% concentration.

Preparation of mixtures

A small volume of water was poured into a 2 l cylinder. Appropriate volumes of each herbicide were then added to this while no particular sequence was followed here. Finally wetter was added from stock solution and the total volume was made up to 1100 ml with water.

Site details

Soil type: clay loam.

Soil condition at spraying: ground firm with even tilth, surface wet.

Temperature: Air = 3.5°C.
Soil = 1.0°C.

Growth stage of crop at spraying = 1-2 leaves, 2.0 tillers up to 6" tall.

Growth stage of weeds at spraying:

*Stellaria media* - average of 20 leaves, 8" diameter.

*Galium aparine* - average of 20 pairs of true leaves and 3 branches, each with average of 6" branch length.

Yields of Crop

Crop head counts in 2 x 1/2 $m^2$ quadrats/plot

were initially carried out to indicate whether differences in potential yield were apparent in these treatments. Final yields per treatment were carried out by combine harvester. The yield and percentage moisture of grain was recorded for each plot and the weights were corrected for moisture content. Machine for combining: Claas Compact, 2.1 m width.

Results

Site 1: Percentage weed control and crop yields in winter wheat (var. Maris Hobbitt)

| Dose rate kg a.i./ha | | | | | Harvest yield | |
|---|---|---|---|---|---|---|
| Compound A | Isoproturon | Mecoprop (as K salt) | *Stellaria media* | *Galium aparine* | mean no. of ear/$m^2$ | mean kg/12.5 $m^2$ |
| 1.0 | 1.0 | 1.3 | 100 | 94 | 283 | 6.4 |
| - | 2.0 | - | 64 | 0 | 160 | 3.9 |
| - | 2.0 | 1.3 | 99 | 86 | 252 | 5.9 |
| Untreated (mean of 3) | | | 0 | 0 | 128 | 3.1 |

This trial demonstrates the excellent efficacy of the combination for control of Stellaria media and Galium aparine even when applied under winter conditions. The head count and yields obtained from the untreated plots demonstrate clearly the very competitive nature of Stellaria media and Galium aparine.

EXPERIMENT 4

Site 2: Southern England

Crop: Winter wheat (Maris Huntsman)

Date sprayed: early March

Machine: a motorized small plot sprayer using 5 x 8002 tee jets each at 50 cm spacing at 30 p.s.i. (2.1 $kgf/cm^2$) giving 252.6 l/ha in low gear.

Plots: 2.5 x 5 m, x 3 replicates for each treatment.

Therefore area to be sprayed = 37.5 sq m.

$$\text{Therefore volume required} = \frac{37.5}{10{,}000} \times 252.6 \times 1000$$

= 947.25 ml (vol. of 1200 ml used for spraying).

Calculated that 1 kg/ha = 3.96 ml/l

= 4.75 ml/1200 ml.

Materials

These were as for site 1.

| Treatments | Dose kg a.i./ha | Volumes in 1200 ml water |
|---|---|---|
| Compound A + | | |
| isoproturon + mecoprop (as K salt) + 0.1% Tween 20 | 1.0 + 1.0 + 1.3 | 9.5 + 9.5 + 10.3 ml |
| isoproturon + 0.1% Tween 20 | 2.0 | 19.0 ml |
| isoproturon + mecoprop (as K salt) + 0.1% Tween 20 | 2.0 + 1.3 | 19.0 + 10.3 ml |

Note: Tween 20 stock solution of 20% was prepared and from this stock 6.0 ml was pipetted into 1200 ml water to give resultant 0.1% concentration.

Preparation of mixtures

This was as for site (1), but volume was made up to 1200 ml with water.

Site details

Soil type: clay loam

Soil condition at spraying: ground firm with even tilth, surface wet

Temperature air = 9°C

Temperature soil = 3.5°C

Growth stage of crop at spraying: 2-3 leaves, tillering, 3-5" tall.

Growth stage of weeds at spraying:

1) Matricaria spp.: 6 branches. Average 2" tall.

2) Stellaria media: 3 branches. Average 4" diameter.

3) Polygonum spp.: Aphanes and Poa not emerged at spraying.

Yields of crop

Crop head counts were carried out in each plot as for site 1. Yield estimations by combine harvester were not carried out at this site.

Results

Site 2: Percentage weed control and crop yield in winter wheat (var. Maris Huntsman) application made in March

| Dose rate kg a.i./ha | | | | | | | | |
|---|---|---|---|---|---|---|---|---|
| Compound A | isoproturon | mecoprop (as K salt) | *Stellaria media* | *Matricaria inodora* | *Polygonum aviculare* | *Aphanes arvensis* | *Poa Annua* | Yield Mean No. of ears/$m^2$ |
| 1.0 + | 1.0 + | 1.3 | 98 | 100 | 96 | 92 | 76 | 241 |
| - | 2.0 | - | 84 | 100 | 92 | 100 | 99 | 230 |
| - | 2.0 + | 1.3 | 91 | 100 | 70 | 77 | 87 | 226 |
| Untreated | | | 0 | 0 | 0 | 0 | 0 | 201 |

This trial shows the excellent activity of the mixture against Stellaria media and Matricaria inodora. It also demonstrates the effective residual activity of this material as Polygonum aviculare, Aphanes arvensis and Poa annua had not emerged at the time of spraying. The combined influence of the weeds on potential crop yields is also clearly demonstrated.

EXPERIMENT 5

Site 3: Southern England

Crop: winter barley (Maris Otter)

Date sprayed: late April.

Machine: a motorized small plot sprayer using 5 x 80015 tee jets each at 50 cm spacing at 30 p.s.i. (2.1 $kgf/cm^2$) giving 197 l/ha in low gear.

Plots: 2.5 x 5 m, x 3 replicates for each treatment.

Therefore area to be sprayed = 37.5 sq m.

$$\text{Therefore vol. required} = \frac{37.5}{10,000} \times 197 \times 1000$$

= 738.8 ml (vol. of 2000 ml used for spraying)

calculated that 1 kg/ha = 5.076 ml/1

= 10.15 ml/2 1

Materials

These were as for sites 1 and 2.

| Treatments | Dose kg a.i./ha | Volumes in 2 l water |
|---|---|---|
| Compound A + | | |
| isoproturon + mecoprop (as K salt) + 0.1% Tween 20 | 1.0 + 1.0 + 1.32 | 20.3 + 20.3 + 22.3 ml |
| isoproturon + 0.1% Tween 20 | 2.0 | 40.6 ml |

Note: Tween 20 stock solution of 10% was prepared and from this stock 20 ml was pipetted into 2 l water to give resultant 0.1% concentration.

Preparation of mixtures

This was as for sites 1 and 2 but volume was made up to 2 l with water.

Site details

Soil type: not known.

Soil condition at spraying: soil surface up to 1/4" deep was dry, beneath that fairly moist. Tilth - cloddy with cap.

Temperature Air = 12°C.

Temperature Soil = 13°C.

Growth stage of crop at spraying: 3-4 tillers, 6-7 leaves.

Growth stage of weeds at spraying:

1) Stellaria media - seedling up to 4 branches.

Matricaria spp. - seedling to 4 leaves.

Veronica persica - cotyledon to 6 leaves.

Polygonum convolvulus about first leaf stage.

Viola arvensis - seedling to first leaf stage.

Polygonum aviculare - cotyledon to first leaf stage.

Aphanes arvensis - 1-4 leaves (mainly 2 leaf).

*Alopecurus myosuroides* - 3-5 tillers, 3-7 leaves well established.

*Poa annua* - 3 leaf stage.

Yields of crop

These were assessed as for site 1 with crop head counts and by harvesting each plot to estimate yields.

Machine for combining: also as for site 1.

Stage 3

Percentage weed control and yield in winter barley/var. Maris Otter.

Site 3: Percentage weed control and yield in winter barley (var. Maris Otter).

| Dose rate kg a.i./ha | | | | | | | |
|---|---|---|---|---|---|---|---|
| Compound A | isoproturon | mecoprop (as K salt) | Stellaria media | Matricaria inodora | Polygonum aviculare | Polygonum convolvulus | Aphanes arvensis |
| 1.0 | 1.0 | 1.32 | 100 | 100 | 100 | 100 | 96 |
| - | 2.0 | - | 81 | 100 | 96 | 46 | 71 |
| Untreated (mean of 2) | | | 0 | 0 | 0 | 0 | 0 |

| Dose rate kg a.i./ha | | | Veronica persica | Viola arvensis | Poa annua | Alopecurus myosuroides | Yield | |
|---|---|---|---|---|---|---|---|---|
| Compound A | isoproturon | mecoprop (as K salt) | | | | | Mean No. of heads/ $m^2$ | Mean kg/ plot ($12.5m^2$) |
| 1.0 | 1.0 | 1.32 | 100 | 100 | 100 | 87 | 297 | 5.8 |
| - | 2.0 | - | 44 | 81 | 99 | 99 | 333 | 5.8 |
| Untreated (mean of 2) | | | 0 | 0 | 0 | 0 | 237 | not taken owing to heavy lodging of crop. |

This trial demonstrates clearly the wide spectrum of control including Veronica and Viola which can be obtained with the mixture.

According to a further feature of the present invention, there are provided compositions suitable for herbicidal use comprising (a) isoproturon and/or metoxuron and (b) 1-(3,4-dichlorobenzyl)imidazole-N,N'-dimethyl-4,5-dicarboxamide (Compound A) in proportions of 4:1 to 1:1 of (a) to (b) [preferably 2:1 to 1:1 of (a) to (b)] in association with, and preferably homogeneously dispersed in, one or more compatible herbicidally-acceptable diluents or carriers (i.e. diluents or carriers of the type generally accepted in the art as being suitable for use in herbicidal compositions and which are compatible with isoproturon and/or metoxuron and Compound A). The term "homogeneously dispersed" is used to include compositions in which the isoproturon and/or metoxuron and Compound A are dissolved in the other components. The term "herbicidal compositions" is used in a broad sense to include not only compositions which are ready for use as herbicides but also concentrates which must be diluted before use. Preferably, the compositions contain from 0.05 to 90% by weight of isoproturon and/or metoxuron and Compound A.

The herbicidal compositions may contain both a diluent or carrier and a surface-active (e.g. wetting,

dispersing, or emulsifying) agent. Surface-active agents which may be present in herbicidal compositions of the present invention may be of the ionic or non-ionic types, for example sulphoricinoleates, quaternary ammonium derivatives, products based on condensates or ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts of sulphuric acid esters and sulphonic acids such as dinonyl- and dioctyl-sodium sulphonosuccinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, adsorbent carbon black and clays such as kaolin and bentonite. The solid compositions (which may take the form of dusts, granules or wettable powders) are preferably prepared by grinding the isoproturon and/or metoxuron and Compound A with solid diluents or by impregnating the solid diluents or carriers with solutions of the isoproturon and/or metoxuron and Compound A in volatile solvents, evaporating the solvents and, if necessary, grinding the products so as to obtain powders. Granular formulations may be prepared

by absorbing the isoproturon and/or metoxuron and Compound A (dissolved in volatile solvents) onto the solid diluents or carriers in granular form and evaporating the solvents, or by granulating compositions in powder form obtained as described above. Solid herbicidal compositions, particularly wettable powders, may contain wetting or dispersing agents (for example of the types described above), which may also, when solid, serve as diluents or carriers.

Liquid compositions according to the invention may take the form of aqueous, organic or aqueous-organic solutions, suspensions and emulsions which may incorporate a surface-active agent. Suitable liquid diluents for incorporation in the liquid compositions include water, acetophenone, cyclohexanone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of the

isoproturon and/or metoxuron and Compound A may be used in the form of self-emulsifying concentrates containing the active substances dissolved in the emulsifying agents or in solvents containing emulsifying agents compatible with the active substances, the simple addition of water to such concentrates producing compositions ready for use.

Suitably, herbicidal compositions according to the present invention may comprise from 0.05% to 10% of surface active agent.

Herbicidal compositions according to the present invention may also contain, if desired, conventional adjuvants such as adhesives, protective colloids, thickeners, penetrating agents, stabilizers, sequestering agents, anti-caking agents, colouring agents and corrosion inhibitors. These adjuvants may also serve as carriers or diluents. Preferred herbicidal compositions according to the present invention are aqueous suspension concentrates which comprise from 10 to 70% w/v of isoproturon and/or metoxuron and Compound A, from 2 to 10% w/v surface-active agent, from 0.1 to 5% w/v of thickener and from 15 to 87.9% by volume of water, and wettable powders which comprise from 10 to 90% w/w of isoproturon and/or metoxuron and Compound A, from 2 to 10% w/w of surface-active agent and from 10 to 88% w/w of diluent or carrier. Herbicidal compositions according to the present invention may also comprise

the isoproturon and/or metoxuron and Compound A in association with, and preferably homogeneously dispersed in, one or more pesticidally active compounds and, is desired, one or more compatible pesticidally acceptable diluents or carriers, surface-active agents and conventional adjuvants as hereinbefore described, which may be prepared by the application of conventional techniques for the preparation of compositions suitable for herbicidal use, for example as hereinbefore described for the preparation of compositions comprising isoproturon and/or metoxuron and Compound A. Examples of compounds which may be included in, or used in conjunction with, the herbicidal compositions of the present invention include especially herbicides with good activity by post-emergence application against Galium aparine, as hereinbefore described and, in particular, mecoprop and its metal, e.g. sodium or potassium, and amine salts and esters, in the proportions hereinbefore specified, or other herbicides, for example:

barban [i.e. 4-chlorobut-2-ynyl N-(3-chlorophenyl) carbamate], benzoylprop-ethyl [i.e. ethyl N-benzoyl-N-(3,4-dichlorophenyl)-2-aminopropionate], bromofenoxim [i.e. 3,5-dibromo-4-hydroxybenzaldehyde 2,4-dinitrophenyl-oxime], chlorfenprop-methyl [i.e. methyl 2-chloro-3-(4-chlorophenyl)propionate], cyanazine [i.e. 2-chloro-4-(1-cyano-1-methylethylamino)-6-ethylamino-1,3,5-triazine], 2,4-D [i.e. 2,4-dichlorophenoxyacetic acid], 2,4-DB [i.e. 4-(2,4-dichlorophenoxy)butyric acid], diclofop-methyl [i.e. methyl ($\pm$)-2-[4-(2,4-dichlorophenoxy)phenoxy], propionate], dicamba [i.e. 3,6-dichloro-2-methoxybenzoic acid], difenzoquat [i.e. 1,2-dimethyl-3,5-diphenyl-pyrazolium], dinoseb [i.e. 2-(1-methylpropyl)-4,6-dinitrophenol], flamprop-isopropyl [i.e. isopropyl ($\pm$)-2-(N-benzoyl-3-chloro-4-fluoroanilino)propionate], flamprop-methyl [i.e. methyl ($\pm$)-2-(N-benzoyl-3-chloro-4-fluoroanilino)propionate], MCPA [i.e. 4-chloro-2-methylphenoxyacetic acid], MCPB [i.e. 4-(4-chloro-2-methylphenoxy)butyric acid] and picloram [i.e. 4-amino-3,5,6-trichloropicolinic acid]; insecticides, e.g. naphth-1-yl N-methylcarbamate; and fungicides, e.g. 2,6-dimethyl-4-tridecyl-morpholine, methyl N-(1-butylcarbamoyl-benzimidazol-2-yl)-carbamate and 1,2-bis(3-methoxycarbonyl-2-thioureido) benzene. Other biologically active materials which may be included in, or used in conjunction with, the herbicidal compositions of the present invention are

plant growth regulators, e.g. maleic hydrazide, N-dimethylamino-succinamic acid, (2-chloroethyl)-trimethylammonium chloride and 2-chloroethane phosphonic acid; or fertilizers, e.g. containing nitrogen, potassium and phosphorus and trace elements known to be essential to successful plant life, e.g. iron, magnesium, zinc, manganese, cobalt and copper.

Pesticidally active compounds and other biologically active materials which may be included in, or used in conjunction with, the herbicidal compositions of the present invention, for example those hereinbefore mentioned, and which are acids, may, if desired, be utilised in the form of conventional derivatives, for example alkali metal and amine salts and esters.

The compositions of the invention may be made up as an article of manufacture comprising isoproturon and/or metoxuron and 1-(3,4-dichlorobenzyl)imidazole-N,N'-dimethyl-4,5-dicarboxamide (Compound A) and optionally other pesticidally active compounds as hereinbefore described and especially herbicides with good activity by post-emergence application against Galium aparine and, in particular, mecoprop and its metal, e.g. sodium or potassium, and amine salts and esters, or, as is preferred, a herbicidal composition as hereinbefore described, and preferably a herbicidal concentrate which must be diluted before use, comprising isoproturon and/or metoxuron and

Compound A within a container for the aforesaid isoproturon and/or metoxuron and Compound A or a said herbicidal composition, and instructions physically associated with the aforesaid container setting out the manner in which the aforesaid isoproturon and/or metoxuron and Compound A or herbicidal composition contained therein is to be used to control the growth of weeds. The containers will normally be of the types conventionally used for the storage of chemical substances which are solids at normal ambient temperatures and herbicidal compositions, particularly in the form of concentrates, for example cans and drums of metal, which may be internally-lacquered, and plastics materials, bottles of glass and plastics materials and, when the contents of the container is a solid, for example granular herbicidal compositions, boxes, for example of cardboard, plastics materials and metal, or sacks. The containers will normally be of sufficient capacity to contain amounts of the imidazole derivatives or herbicidal compositions sufficient to treat at least one acre of ground to control the growth of weeds therein but will not exceed a size which is convenient for conventional methods of handling. The instructions will be physically associated with the container, for example by being printed directly thereon or on a label or tag affixed thereto. The directions will normally indicate that the contents of the container, after dilution

if necessary, are to be applied to control the growth of weeds at rates of application between 0.25 kg and 2 kg each of isoproturon and/or metoxuron and Compound A per hectare in the manner and for the purposes hereinbefore described.

The following Examples illustrate herbicidal compositions according to the present invention.

EXAMPLE 1

An aqueous suspension concentrate formulation containing:-

| | |
|---|---|
| Isoproturon | 31.25% w/v |
| 1-(3,4-dichlorobenzyl)imidazole-N,N'-dimethyl-4,5-dicarboxamide | 18.75% w/v |
| Tween 20 (polyoxyethylene sorbitan monolaurate) | 5.0 % w/v |
| Rhodigel 23 (polysaccharide xanthan gum thickener) | 0.1 % w/v |
| formaldehyde solution (40% w/v) | 0.05% w/v |
| water | to 100% by volume |

was prepared, by intimately mixing the ingredients and grinding in a ball-mill, for use at a rate of 4 litres in 200 litres of water/ha to control a wide spectrum of grass and broad-leafed weeds as hereinbefore described in cereal crops.

EXAMPLE 2

An aqueous suspension concentrate formulation was formed from:-

| | |
|---|---|
| Isoproturon | 25% w/v |
| 1-(3,4-dichlorobenzyl)imidazole-N,N'-dimethyl-4,5-dicarboxamide | 15% w/v |

| | |
|---|---|
| mecoprop (as potassium salt) | 15% a.i. w/v |
| Ethylan BCP (a nonylphenol/ethylene oxide condensate containing 9 moles of ethylene oxide per mol of phenol) | 2% w/v |
| Antifoam FD (silicone emulsion anti-foaming agent) | 0.5% w/v |
| Pluronic L62 (an ethylene oxide/propylene oxide block co-polymer) | 2% w/v |
| Sopropon T36 (sodium salt of polycarboxylic acid) | 0.5% w/v |
| Attagel 50 (swelling attapulgite clay thickener) | 0.5% w/v |
| Water | to 100% by volume |

by intimately mixing the ingredients and grinding in a ball-mill for 24 hours. The concentrate thus obtained may be dispersed in water and applied at a rate of 5 litres of aqueous suspension concentrate in 300 litres of spray fluid per hectare to control the growth of a wide spectrum of broad-leafed weeds and grasses as hereinbefore described, for example Veronica persica, Viola arvensis, Stellaria media, Polygonum aviculare, Galium aparine, Matricaria inodora and Alopecurus myosuroides, by post-emergence application in an emerged crop of winter wheat.

EXAMPLE 3

A wettable powder was formed from:-

| | |
|---|---|
| Metoxuron | 40% w/w |
| 1-(3,4-dichlorobenzyl)imidazole-N,N'-dimethyl-4,5-dicarboxamide | 20% w/w |

Arylan S (sodium dodecyl benzene sulphonate) 2% w/w

Darvan No 2 (sodium lignosulphate) 5% w/w

Aerosil (silicon dioxide of microfine particle size) 5% w/w

Celite PF (synthetic magnesium silicate carrier) 28% w/w

by mixing the ingredients and grinding the mixture in a hammer-mill to give a wettable powder which may be diluted with water and applied at a rate of 5 kg of wettable powder in 200 litres of spray fluid per hectare to control the growth of a wide spectrum of broad-leafed weeds and grasses as hereinbefore described, for example Veronica persica, Viola arvensis, Stellaria media, Matricaria inodora, Polygonum spp., and Alopecurus myosuroides, by post-emergence application in an emerged crop of winter wheat.

EXAMPLE 4

A wettable powder was formed from:-

Isoproturon 40% w/w

1-(3,4-dichlorobenzyl)imidazole-N,N'-dimethyl-4,5-dicarboxamide 10% w/w

Arylan S (sodium dodecyl benzene sulphonate) 2% w/w

Darvan No. 2 (sodium lignosulphate) 5% w/w

Aerosil (silicon dioxide of microfine particle size) 5% w/w

Celite PF (synthetic magnesium silicate carrier) 38% w/w

by mixing the ingredients and grinding the mixture in a hammer-mill to give a wettable powder which may be diluted with water and applied at an application rate of 2.5 kg of wettable powder in 200 litres of spray fluid per hectare to control the growth of a wide spectrum of broad-leafed weeds and grasses as hereinbefore described, for example *Veronica persica*, *Viola arvensis*, *Stellaria media*, *Matricaria inodora*, *Polygonum* spp., and *Poa annua*, by post-emergence application in an emerged crop of winter wheat.

EXAMPLE 5

A wettable powder was formed from:-

| | |
|---|---|
| Isoproturon | 25% w/w |
| 1-(3,4-dichlorobenzyl)imidazole-N,N'-dimethyl-4,5-dicarboxamide | 25% w/w |
| Arylan S (sodium dodecyl benzene sulphonate) | 2% w/w |
| Darvan No. 2 (sodium lignosulphate) | 5% w/w |
| Aerosil (silicon dioxide of microfine particle size) | 5% w/w |
| Celite PF (synthetic magnesium silicate carrier) | 38% w/w |

by mixing the ingredients and grinding the mixture in a hammer-mill to give a wettable powder which may be diluted with water and applied at application rates of from 1 to 8 kg of wettable powder in 200 to 1000 litres of spray fluid per hectare to control the growth of a wide spectrum of broad-leafed weeds and grasses as hereinbefore

described by post-emergence application in an emerged crop of winter wheat, the lower application rates of from 1 to 3 kg/ha being particularly suitable for controlling the growth of seedling broad-leafed weeds and grasses, for example Stellaria media, Matricaria inodora, Veronica persica, Viola arvensis, Polygonum spp., and Poa annua, and the higher application rates being particularly suitable for controlling the growth of established broad-leafed weeds and grasses, for example Stellaria media, Matricaria inodora, Veronica persica, Viola arvensis, Polygonum spp., Alopecurus myosuroides, Poa annua and Avena fatua.

EXAMPLE 6

An aqueous suspension concentrate was formed from:-

| | |
|---|---|
| Isoproturon | 20% w/v |
| 1-(3,4-dichlorobenzyl)imidazole-N,N'-dimethyl-4,5-dicarboxamide | 20% w/v |
| mecoprop (as potassium salt) | 10% a.i. w/v |
| Ethylan BCP (a nonylphenol/ethylene oxide condensate containing 9 moles of ethylene oxide per mol of phenol) | 2% w/v |
| Antifoam FD (silicone emulsion anti-foaming agent) | 0.5% w/v |
| Pluronic L62 (an ethylene oxide/propylene oxide block co-polymer) | 2% w/v |

| | |
|---|---|
| Sopropon T36 (sodium salt of polycarboxylic acid) | 0.5% w/v |
| Attagel 50 (swelling attapulgite clay) | 0.5% w/v |
| Water | to 100% by volume |

by intimately mixing the ingredients and grinding in a ball-mill for 24 hours. The concentrate thus obtained may be dispersed in water and applied at an application rate of 5 litres of aqueous suspension concentrate in 300 litres of spray fluid per hectare to control the growth of a wide spectrum of broad-leafed weeds and grasses as hereinbefore described, for example _Veronica persica_, _Viola arvensis_, _Stellaria media_, _Polygonum aviculare_, _Galium aparine_, _Matricaria inodora_ and _Alopecurus myosuroides_, by post-emergence application in an emerged crop of winter wheat.

EXAMPLE 7

An aqueous suspension concentrate was formed from:-

| | |
|---|---|
| Isoproturon | 10% w/v |
| 1-(3,4-dichlorobenzyl)imidazole-N,N'-dimethyl-4,5-dicarboxamide | 10% w/v |
| mecoprop (as potassium salt) | 20% a.i. w/v |
| Ethylan BCP (a nonylphenol/ethylene oxide condensate containing 9 moles of ethylene oxide per mol of phenol) | 2% w/v |
| Antifoam FD (silicone emulsion anti-foaming agent) | 0.5% w/v |

| | |
|---|---|
| Pluronic L62 (an ethylene oxide/propylene oxide block co-polymer) | 2% w/v |
| Sopropon T36 (sodium salt of polycarboxylic acid) | 0.5% w/v |
| Attagel 50 (swelling attapulgite clay) | 0.5% w/v |
| Water | to 100% by volume |

by intimately mixing the ingredients and grinding in a ball-mill for 24 hours. The concentrate thus obtained may be dispersed in water and applied at an application rate of 10 litres of aqueous suspension concentrate in 300 litres of spray fluid per hectare to control the growth of a wide spectrum of broad-leafed weeds and grasses as hereinbefore described, for example *Veronica persica*, *Viola arvensis*, *Stellaria media*, *Polygonum aviculare*, *Galium aparine*, *Matricaria inodora* and *Alopecurus myosuroides*, by post-emergence application in an emerged crop of winter wheat.

EXAMPLE 8

A wettable powder was formed from:-

| | |
|---|---|
| Isoproturon | 60% w/w |
| 1-(3,4-dichlorobenzyl)imidazole-N,N'-dimethyl-4,5-dicarboxamide | 30% w/w |
| Arylan S (sodium dodecyl benzene sulphonate) | 2% w/w |
| Darvan No. 2 (sodium lignosulphate) | 5% w/w |
| Celite PF (synthetic magnesium silicate carrier) | 3% w/w |

by mixing the ingredients and grinding the mixture in a hammer-mill to give a wettable powder which may be diluted with water and applied at a rate of 3 kg of wettable powder in 200 litres of spray fluid per hectare to control the growth of a wide spectrum of established broad-leafed weeds and grasses as hereinbefore described, for example Veronica persica, Viola arvensis, Stellaria media, Matricaria inodora, Polygonum spp., and Alopecurus myosuroides, by post-emergence application in an emerged crop of winter wheat.

EXAMPLE 9

A wettable powder was formed from:-

| | |
|---|---|
| Isoproturon | 20% w/w |
| Metoxuron | 20% w/w |
| 1-(3,4-dichlorobenzyl)imidazole-N,N'-dimethyl-4,5-dicarboxamide | 20% w/w |
| Arylan S (sodium dodecyl benzene sulphonate) | 2% w/w |
| Darvan No. 2 (sodium lignosulphate) | 5% w/w |
| Aerosil (silicon dioxide of microfine particle size) | 5% w/w |
| Celite PF (synthetic magnesium silicate carrier) | 28% w/w |

by mixing the ingredients and grinding the mixture in a hammer-mill to give a wettable powder which may be diluted with water and applied at a rate of 5 kg of wettable powder in 200 litres of spray fluid per hectare to

control the growth of a wide spectrum of broad-leafed weeds and grasses as hereinbefore described, for example *Veronica persica*, *Viola arvensis*, *Stellaria media*, *Matricaria inodora*, *Polygonum* spp., and *Alopecurus myosuroides*, by post-emergence application in an emerged crop of winter wheat.

CLAIMS

1. A composition for the control of weeds comprising the herbicide(s) isoproturon and/or metoxuron in association with one or more compatible herbicidally-acceptable diluents or carriers, characterized in that the herbicidal composition includes 1-(3,4-dichlorobenzyl)imidazole-N,N'-dimethyl-4,5-dicarboxamide, and the proportions of isoproturon and/or metoxuron to said imidazole derivative are from 4:1 to 1:1 by weight.

2. A composition for the control of weeds comprising the herbicide isoproturon in association with one or more compatible herbicidally-acceptable diluents or carriers, characterized in that the herbicidal composition includes 1-(3,4-dichlorobenzyl)-imidazole-N,N'-dimethyl-4,5-dicarboxamide, and the proportion of isoproturon to said imidazole derivative is from 4:1 to 1:1 by weight.

3. A herbicidal composition according to claim 1 characterized in that the proportions of (a) isoproturon and/or metoxuron to (b) 1-(3,4-dichlorobenzyl)imidazole-N,N'-dimethyl-4,5-dicarboxamide in the composition are from 2:1 to 1:1 by weight of (a) to (b).

4. A herbicidal composition according to claim 2 characterized in that the proportion of isoproturon to 1-(3,4-dichlorobenzyl)imidazole-N,N'-dimethyl-4,5-dicarboxamide in the composition is from 2:1 to 1:1 by weight.

5. A herbicidal composition according to any one of claims 1 to 4 characterized in that it contains from 0.05 to 90% weight of isoproturon and/or metoxuron and 1-(3,4-dichlorobenzyl)imidazole-N,N'-dimethyl-4,5-dicarboxamide.

6. A herbicidal composition according to any one of claims 1 to 5 characterized in that it contains from 0.05 to 10% of surface-active agent.

7. A herbicidal composition according to claim 6 in the form of an aqueous suspension concentrate characterized in that it comprises from 10 to 70% w/v of isoproturon and/or metoxuron and 1-(3,4-dichlorobenzyl)imidazole-N,N'-dimethyl-4,5-dicarboxamide, from 2 to 10% w/v of surface-active agent, from 0.1 to 5% w/v of thickener and from 15 to 87.9% by volume of water.

8. A herbicidal composition according to claim 6 in the form of a wettable powder characterized in that it comprises from 10 to 90% w/w of isoproturon and/or metoxuron and 1-(3,4-dichlorobenzyl)imidazole-N,N'-dimethyl-4,5-dicarboxamide, from 2 to 10% w/w of

surface-active agent and from 10 to 80% w/w of diluent or carrier.

9. A herbicidal composition according to any one of claims 1 to 8 characterized in that it contains one or more other pesticidally-active (including herbicidally active) compounds.

10. A herbicidal composition according to any one of claims 1 to 8 characterized in that it contains, in addition, the herbicide mecoprop optionally in the form of a metal or amine salt, or an ester.

11. A herbicidal composition according to claim 10 characterized in that the amount of mecoprop (a.i.) in the composition is in a proportion of 1:2 to 4:1 of the total amount of isoproturon and/or metoxuron and 1-(3,4-dichlorobenzyl)imidazole-N,N'-dimethyl-4,5-dicarboxamide.

12. A herbicidal composition according to claim 11 characterized in that the amount of mecoprop (a.i.) in the composition is in a proportion of 1:2 to 2:1 of the total amount of isoproturon and/or metoxuron and 1-(3,4-dichlorobenzyl)imidazole-N,N'-dimethyl-4,5-dicarboxamide.

13. A method of controlling the growth of weeds at a locus characterized in the application to the locus of a herbicidally-effective amount of a herbicidal composition as claimed in any one of claims 1 to 12.

14. A method according to claim 13 of controlling the growth of *inter alia* the weeds *Veronica* spp. or *Viola* spp. at a locus characterized in the application to the locus of a herbicidal composition as claimed in any one of claims 1 to 12 containing an amount of (a) isoproturon and/or metoxuron and (b) 1-(3,4-dichlorobenzyl)imidazole-N,N'-dimethyl-4,5-dicarboxamide sufficent to control said weed species.

15. A method according to claim 13 of controlling the growth of *inter alia* the weeds *Stellaria media*, *Matricaria inodora* or *Polygonum* spp. at a locus characterized in the application to the locus of a herbicidal composition as claimed in any one of claims 1 to 12 containing an amount of (a) isoproturon and/or metoxuron and (b) 1-(3,4-dichlorobenzyl)imidazole-N,N'-dimethyl-4,5-dicarboxamide sufficient to control said weed species.

16. A method according to claim 13,14 or 15 of controlling the growth of weeds characterized in the application to a locus of a herbicidal composition as claimed in any one of claims 1 to 12, the rate of application being such as to give between 0.25 and 2 kg/ha of (a) isoproturon and/or metoxuron, and between 0.25 and 2 kg/ha of (b) 1-(3,4-dichlorobenzyl)-

imidazole-N,N'-dimethyl-4,5-dicarboxamide.

17. A method according to claim 16 in which the rate of application to the locus of (a) isoproturon and/or metoxuron is between 0.75 and 2 kg/ha and that of (b) 1-(3,4-dichlorobenzyl)imidazole-N,N'-dimethyl-4,5-dicarboxamide is between 0.75 and 2 kg/ha.

18. A method of controlling the growth of weeds according to any one of claims 13 to 17 characterized in that the herbicidal composition applied to the locus also includes the herbicide mecoprop, or a metal or amine salt or ester thereof, or another herbicide known to control the growth of the weed Galium aparine.

19. A method according to claim 18 characterized in that the amount of mecoprop applied to the locus is from 0.5 to 2.0 kg a.i./ha in proportions of 1:2 to 4:1 of the total amount of isoproturon and/or metoxuron and 1-(3,4-dichlorobenzyl)imidazole-N,N'-dimethyl-4,5-dicarboxamide applied to the locus.

20. A method according to claim 19 characterized in that the amount of mecoprop applied to the locus is from 0.5 to 2.0 kg a.i./ha in proportions of 1:2 to 2:1 of the total amount of isoproturon and/or metoxuron and 1-(3,4-dichlorobenzyl)imidazole-N,N'-dimethyl-4,5-dicarboxamide applied to the locus.

21. A method of controlling the growth of weeds according to any one of claims 13 to 20 characterized in that the herbicidal composition is applied to an area used, or to be used, for growing a cereal crop.

22. A method according to claim 21 in which the cereal is wheat, barley, oats or rye.

23. A method of controlling the growth of weeds according to any one of claims 13 to 22 characterized in that the herbicidal composition as claimed in any one of claims 1 to 12 is applied to a locus after emergence of the weeds above the surface of the soil.

0036244

European Patent Office

# EUROPEAN SEARCH REPORT

Application number
EP 81 30 0430

## DOCUMENTS CONSIDERED TO BE RELEVANT

| Category | Citation of document with indication, where appropriate, of relevant passages | Relevant to claim |
|---|---|---|
| D | DE - A - 2 809 022 (MAY & BAKER)<br>* Claims 1,10, 24-49, 51-61; page 57, lines 14-24 and page 58, line 30 *<br>------ | 1-23 |

CLASSIFICATION OF THE APPLICATION (Int Cl.³)

A 01 N 47/30//
(A 01 N 47/30,
43/50)

TECHNICAL FIELDS SEARCHED (Int Cl.³)

A 01 N 47/30
43/50

CATEGORY OF CITED DOCUMENTS

X: particularly relevant
A: technological background
O: non-written disclosure
P: intermediate document
T: theory or principle underlying the invention
E: conflicting application
D: document cited in the application
L. citation for other reasons

&: member of the same patent family
corresponding document

X The present search report has been drawn up for all claims

| Place of search | Date of completion of the search | Examiner |
|---|---|---|
| The Hague | 24-06-1981 | MERGONI |